# EUROPÄISCHE PATENTSCHRIFT

(11) **EP 2 606 237 B1**
(45) Veröffentlichungstag und Bekanntmachung des Hinweises auf die Patenterteilung: **07.09.2016**
(21) Anmeldenummer: 11730986.4
(22) Anmeldetag: 13.07.2011
(51) Int. Cl.: F04D 13/06, F04D 29/58, H01M 8/04

(54) **PUMPE MIT EINEM ELEKTROMOTOR SOWIE VERFAHREN ZUM EINSCHALTEN EINER DERARTIGEN PUMPE**
PUMP WITH AN ELECTRIC MOTOR AND METHOD FOR SWITCHING ON A PUMP OF THIS TYPE
POMPE MUNIE D'UN MOTEUR ÉLECTRIQUE ET PROCÉDÉ POUR ENCLENCHER UNE TELLE POMPE

(30) Priorität: 20.08.2010 DE 102010035039
(43) Veröffentlichungstag der Anmeldung: 26.06.2013
(73) Patentinhaber: Pierburg GmbH, 41460 Neuss (DE)
(72) Erfinder: NIGRIN, Sven, 40468 Düsseldorf (DE); BURGER, Andreas, 47803 Krefeld (DE); BENRA, Michael-Thomas, 44579 Castrop-Rauxel (DE); GLOGASA, Martin, 41464 Neuss (DE); RECHBERG, Peter-Martin, 45699 Herten (DE); GOMMERS, Hans-Georg, 41844 Wegberg (DE)
(74) Vertreter: Patentanwälte ter Smitten Eberlein Rütten Partnerschaftsgesellschaft
(86) Internationale Anmeldenummer: PCT/EP2011/061920
(87) Internationale Veröffentlichungsnummer: WO 2012/022549

(56) Entgegenhaltungen:
- WO-A1-92/15144
- DE-A1- 10 045 291
- DE-A1-102007 049 641
- US-A- 4 638 643

## Beschreibung

Die Erfindung betrifft eine Pumpe mit einem Elektromotor, sowie ein Verfahren zum Betreiben einer derartigen Pumpe. gemäß den Oberbegriffen der Ansprüche 1 und 4 Solche Pumpen und entsprechendes Verfahren sind z.B. aus der US-A-46838643 bekannt. Hierbei weist der Elektromotor für eine derartige Pumpe einen Stator mit auf Polschenkeln angeordneten Statorwicklungen und einen permanent magnetischen Rotor auf, wobei der Rotor über eine Rotorwelle ein Laufrad antreibt.

Derartige Pumpen werden insbesondere bei Brennstoffzellensystemen eingesetzt. Diese Brennstoffzellensysteme dienen zur Umwandlung von chemischer Reaktionsenergie eines kontinuierlich zugeführten Brennstoffes, insbesondere Wasserstoff und eines Oxidationsmittels, zumeist Sauerstoff, in elektrische Energie, die beispielsweise als Antriebsenergie für Fahrzeuge verwendet werden kann. Verschiedene Arten von Pumpen können dabei in einem derartigen Brennstoffzellensystem angeordnet sein. Im abgeschalteten Zustand und bei niedrigen Umgebungstemperaturen kann es jedoch dazu kommen, dass aufgrund von Wasserausfrierungen bewegliche Teile einer Pumpe festfrieren. Besonders bei Fördermedien mit hohem Wasseranteil besteht die Gefahr des Festfrierens der beweglichen Teile wie Lager, Rotor oder Laufrad und somit die Gefahr des Blockierens des Motors beim Anlauf, was zum Ausfall des Motors und damit der Pumpe führen kann.

Derartige Probleme sind beispielsweise aus der DE 10 2007 049 641 A1 bekannt, die ebenfalls eine Pumpe mit Elektromotor offenbart. Um Festfrierungen zu lösen, weist die Anordnung ein Spaltrohr auf, welches als Heizelement mit Heizleitern ausgebildet ist, über die die elektrische Energie ausgehend von der Betriebsspannung zur Aufheizung des Spaltrohrs zugeführt wird. Nachteilig ist bei dieser Lösung, dass das Spaltrohr zusätzliche Leitungen aufweisen muss, die durch das Motorgehäuse geführt werden müssen, um eine Verbindung mit der Betriebsspannung zu erhalten, wodurch der Montageprozess erschwert und die Herstellkosten erhöht werden.

Darüber hinaus ist aus der US 4,638,643 eine gattungsgemäße Pumpe bekannt, die jedoch Nachteile hinsichtlich der Schnelligkeit und Effizienz des Aufheizvorganges aufweist.

Es ist daher Aufgabe der Erfindung, eine Pumpe und ein Verfahren zum Einschalten einer derartigen Pumpe zur Verfügung zu stellen, mit dem ein Festfrieren der sich drehenden Bauteile der Pumpe und des damit verbundenen Elektromotors gelöst werden kann, ohne das weitere Bauteile benötigt werden, sowie ohne erhöhten montagetechnischen Aufwand.

Die Aufgabe wird durch eine Pumpe mit Elektromotor gelöst gemäß Anspruch 1, so dass eine schnelle und effiziente Wärmeeinleitung in die Bauteile des Elektromotors und der Pumpe gewährleistet ist.

Des Weiteren wird die Aufgabe durch ein Verfahren gemäß Anspruch 4 gelöst. wodurch eine gleichmäßige Verteilung der thermischen Belostung gewährleistet wird. Durch diese Vorgehensweise wird ein Überhitzen der Statorwicklungen bei der Aufheizung vermieden.

Vorzugsweise ist das Isolierorgan als eine Beschichtung der Polschenkel ausgeführt, welche in einem einfachen Spritzgussverfahren erstellt werden kann.

Um zwischen dem Stator und dem Motorgehäuse, der aus elektrisch leitfähigem Material besteht, ist in einer vorteilhaften Ausführungsform ein Einlegeelement aus einem elektrisch isolierenden Material zwischen dem Stator und dem Motorgehäuse derart angeordnet, dass ein Sicherheitsabstand eingehalten wird.

Um eine unnötige Schaltung in den Heizmodus, der einen zusätzlichen Energieverbrauch beinhaltet, zu vermeiden und die Startzeit der Pumpe zu reduzieren, wird in einer vorteilhaften Ausführungsform des Verfahrens zunächst eine Kommutierung gestartet und in einem darauffolgenden Schritt detektiert, ob der Rotor rotiert, wobei bei Rotation des Rotors die Kommutierung fortgesetzt wird, und bei Stillstand des Rotors der Heizmodus einschaltet wird.

In vorteilhafter Weise wird in dem Verfahren die Temperatur T der Statorwicklungen (16) in Abhängigkeit vom Stromfluß und einer vorgegebenen Spannung unter Bezugnahme auf den spezifischen Widerstand des Spulenmaterials gemäß der Gleichung R(T) = R(T₀) x (1 + o x (T - T₀)) ermittelt, so dass es keiner weiteren Messmittel bedarf, um eine fehlerfreie Funktion der Statorwicklungen als Heizung zu gewährleisten.

Die Erfindung wird anhand einer perspektivischen Schnittansicht einer erfindungsgemäßen Pumpe in der einzigen Figur näher beschrieben.

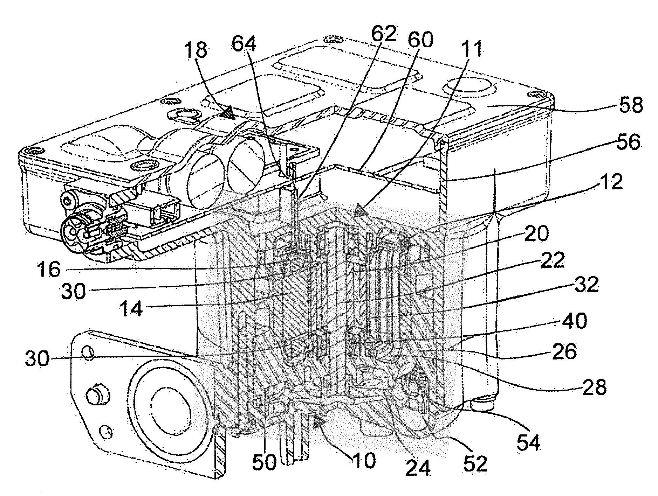

Figur 1 zeigt die erfindungsgemäße Pumpe 10 mit einem Elektromotor 11, der in einem Motorgehäuse 26 angeordnet ist. Desweiteren wird das Motorgehäuse 26 von einem Elektronikgehäuseteil 56 und einem Pumpengehäusedeckel 50, die ineinandergreifen, vollständig umschlossen. In dem in Figur 1 gezeigten Ausführungsbeispiel ist die Pumpe 10 als Seitenkanalgebläse ausgeführt und weist einen ersten Seitenkanal 52 und einen zweiten Seitenkanal 54 auf, wobei der erste Seitenkanal 52 im Pumpengehäusedeckel 50 und der zweite Seitenkanal im innenliegenden Motorgehäuse 26 ausgebildet ist.

Der im Motorgehäuse 26 liegende Elektromotor 11 weist einen Stator 12 mit auf Polschenkeln 14 angeordneten Statorwicklungen 16 und einen permanentmagnetischen Rotor 20 auf. Im dargestellten Ausführungsbeispiel trennt ein Spalttopf 32 den Rotor 20 vom Stator 12. Desweiteren wird der Elektromotor 11 neben dem Motorgehäuse 26 zusätzlich axial durch Elektronikgehäuseteil 56 begrenzt.

Ein Pumpenlaufrad 24 mit Schaufeln ist mit einer Rotorwelle 22 verbunden und ist drehbar im dem Elektronikgehäuseteil 56 gegenüberliegenden Teil des Motorgehäuses 26 gelagert, wobei die Rotorwelle 22 über Kugellager 40 oder andere Lager im Motorgehäuse 26 und Elektronikgehäuseteil 56, gelagert ist.

Ein Einlegelement 28 aus einem elektrisch isolierenden Kunststoff verhindert einen elektrisch leitenden Kontakt zwischen dem Gehäuse 26 und dem Statorwicklungen 16. Desweiteren weist das Material des Einlegeelements 28 gute wärmeleitende Eigenschaften auf, so dass im Heizmodus, der im Weiteren beschrieben wird, eine thermische Isolationswirkung deutlich reduziert wird.

Jeder Polschenkel 14 des Stators 12 weist außerdem eine Beschichtung auf, die als Isolierorgan 30 ausgeführt ist und den Polschenkel 14 von den Statorwicklungen 16 trennt. Das Isolierorgan 30 besteht aus einem elektrisch isolierenden, wärmeleitfähigen Kunststoff und ermöglicht eine schnelle Wärmeabgabe an die umliegenden, zu erwärmenden Bauteile.

Die Verwendung von wärmeleitfähigem Material verhindert außerdem ein Überhitzen des Elektromotors 11 im Heizmodus, da die Wärme schnell aus den Wicklungen 16 zum umliegenden Gehäuse 26, 56 abgeführt werden kann.

Desweiteren weist die Pumpe 10 mit dem Elektromotor 11 eine Steuerschaltung 18 auf, die innerhalb des Elektronikgehäuseteils 56 angeordnet ist. Dabei teilt eine Elektronikplatine 60 das Elektronikgehäuseteil 56 in zwei Bereiche, wobei in einem ersten Bereich die Steuerschaltung 18 angeordnet ist und einem zweiten Bereich der Elektromotor 11 der Pumpe 10 angeordnet. Der erste Bereich des Elektronikgehäuseteils 56, der die Steuerschaltung 18 beinhaltet, wird durch einen Elektronikgehäusedeckel 58 verschlossen. Um eine Signalverbindung zwischen der Steuerschaltung 18 und dem Stator 12 zu ermöglichen, weist die Elektronikplatine 60 des Elektronikgehäuseteils 56 eine Öffnung 64 auf, durch die entsprechende Leitungen 62 geführt werden. Eine derartige Steuereinheit 18 kann sowohl den Elektromotor 11 in verschiedene Betriebszustände versetzen als auch die Drehlage des Elektromotors 11 detektieren.

Da es bei Pumpen im abgeschalteten Zustand und bei Außentemperaturen unterhalb des Gefrierpunkts zu Wassereinlagerungen und Festfrierungen, insbesondere an den beweglichen Teilen wie den Kugellagern 40, dem Rotor 20 oder dem Laufrad 24 kommen kann, besteht die Gefahr des Blockierens des Motors beim Anlauf, was zu Beschädigungen des Motors und zum Ausfall der Pumpe führen kann. Um derartige Wassereinlagerungen oder Festfrierungen zu lösen, können die Statorwicklungen 16 des Elektromotors 11 vor Anlauf des Motors als Heizelement genutzt werden, in dem über die Steuerschaltung 18 ein Heizmodus einschaltbar ist. Der Heizmodus ist derart ausgeführt, dass benachbarte Statorwicklungen 16 alternierend bestromt werden. In einem ersten Schritt wird also der Heizmodus eingeschaltet, wobei dies zu einer Aufheizung der Statorwicklungen 16 führt. Die an den Statorwicklungen 16 entstehende Wärme wird über die wärmeleitenden Isolierorgane 30 direkt an die Polschenkel 14 und an den daran anliegenden Spalttopf 32 weitergegeben. Durch die Erwärmung des Spalttopfes 32 und damit seines Innenraums wird der Rotor 20, die Rotorwelle 22 und die Kugellager 40 von möglichen Festfrierungen durch Auftauen des Eises gelöst. Da auch das Einlegeelement 28 aus einem wärmeleitfähigen Kunststoff gefertigt ist, wird auch in axialer Richtung des Stators 12 das Motorgehäuse 26 erwärmt, wodurch das Laufrad 24 und die Seitenkanäle 52, 54 leichter erwärmt werden. In einem zweiten Schritt wird der Heizmodus nach einer Zeit t_{W} oder mit Erreichen einer Temperatur T_{W} der Heizmodus gestoppt. Hierdurch wird eine Überhitzung der Statorwicklungen 16 vermieden und ein Zeitpunkt, zu dem das Eis geschmolzen sein muss, festgelegt. Nach der Abschaltung des Heizmodus wird in einem dritten Schritt die Kommutierung des Elektromotors 11 in bekannter Weise gestartet.

Selbstverständlich ist der Schutzumfang der Anmeldung nicht auf das beschriebene Ausführungsbeispiel beschränkt. So kann die Steuerschaltung derart ausgeführt werden, dass zunächst ein Steckenbleiben detektiert wird, bevor der Heizmodus eingeschaltet wird.

Auch sind konstruktive Änderungen an der Pumpe selbstverständlich durchführbar, soweit sie den Schutzbereich des Hauptanspruchs nicht verlassen.

## Patentansprüche

1. Pumpe (10) mit einem Elektromotor (11), der einen Stator (12) mit auf Polschenkeln (14) angeordneten Statorwicklungen (16) und einen permanent magnetischen Rotor (20) aufweist, wobei der Rotor (20) über eine Rotorwelle (22) ein Pumpenlaufrad (24) antreibt, wobei die Statorwicklungen (16) als Heizelement dienen und eine Steuerschaltung (18) vorgesehen ist über die die Statorwicklungen (16) in einen Heizmodus schaltbar sind, wobei die Steuerschaltung (18) in einem ersten Schritt der Heizmodus eine schaltet und in einem zweiten Schritt nach einer Zeit t_{W} oder mit Erreichen einer Temperatur T_{W} der Heizmodus stoppt und in einem dritten Schritt die Kommutierung des Elektromotors (11) startet, **dadurch gekennzeichnet, dass**
zwischen den Statorwicklungen (16) und den Polschenkeln (14) ein Isolierorgan (30) angeordnet ist, dass aus einem wärmeleitfähigen Kunststoff besteht, und die Steuerschaltung (18) den Heizmodul derart ansführt, dass benachbarte Statorwicklungen (16) alternierend unit Spannung beanfschlagt werden.

2. Pumpe (10) nach Anspruch 1,
**dadurch gekennzeichnet, dass**
das Isolierorgan (30) eine Beschichtung der Polschenkel (14) aus einem wärmeleitfähigen Kunststoff ist.

3. Pumpe (10) nach Anspruch 1 oder 2,
**dadurch gekennzeichnet, dass**
zwischen dem Stator (12) und dem Motorgehäuse (26) ein Einlegeelement (28) aus elektrisch isolierenden Material angeordnet ist.

4. Verfahren zum Betreiben einer Pumpe (10) nach einem der Ansprüche 1 bis 3,
**dadurch gekennzeichnet, dass**
der Heizmodus derart ausgeführt ist, dass benachbarte Statorwicklungen (16) alternierend mit Spannung beaufschlagt werden.

5. Verfahren zum Betreiben einer Pumpe (10) nach Anspruch 4,
**dadurch gekennzeichnet, dass**
zunächst eine Kommutierung gestartet wird und in einem darauffolgenden Schritt detektiert wird, ob der Rotor (20) rotiert, wobei bei Rotation des Rotors (20) die Kommutierung fortgesetzt wird, und lediglich bei Stillstand des Rotors (20) das Verfahren durchgeführt wird.

6. Verfahren zum Betreiben einer Pumpe nach einem der Ansprüche 4 bis 5,
**dadurch gekennzeichnet, dass**
die Temperatur T der Statorwicklungen (16) in Abhängigkeit vom Stromfluß und vorgegebener Spannung unter Bezugnahme auf den spezifischen Widerstand des Spulenmaterials gemäß R(T) = R(T₀) x (1 + α x (T - T₀)) bestimmt wird.

## Claims

1. Pump (10) with an electric motor (11) comprising a stator (12) with stator windings (16) arranged on pole shanks (14) and with a permanent magnetic rotor (20), wherein the rotor (20) drives a pump impeller (24) via a rotor shaft (22), wherein the stator windings (16) serve as a heating element and a control circuit (18) is provided via which the stator windings (16) can be switched to a heating mode, wherein the control circuit (18) switches on the heating mode in a first step and, in a second step, stops the heating mode after a time t_{w} or upon reaching a temperature T_{w} and starts a commutation of the electric motor (11) in a third step,
**characterized in that**
an insulation member (30) is arranged between the stator windings (16) and the pole shanks (14), the insulation member being made of a thermally conductive plastic material, and the control circuit (18) performs the heating mode such that respectively adjacent stator windings (16) are alternately supplied with tension.

2. Pump (10) of claim 1, **characterized in that** the insulation member (30) is a coating of the pole shanks (14), the coating being made of a thermally conductive plastic material.

3. Pump (10) of claim 1 or 2, **characterized in that** an insert element (28) of an electrically insulating material is arranged between the stator (12) and the motor housing (26).

4. Method for operating a pump (10) of one of claims 1 to 3, **characterized in that** the heating mode is performed such that respectively adjacent stator windings (16) are alternately supplied with tension.

5. Method for operating a pump (10) of claim 4, **characterized in that** first, a commutation is started and in a subsequent step it is detected whether the rotor (20) rotates, wherein, when the rotor (20) rotates, the commutation is continued, and the method is continued only if the rotor (20) is at a standstill.

6. Method for operating a pump (10) of one of claims 4 to 5, **characterized in that** the temperature T of the stator windings (16) is determined in dependence on the current flow and the predetermined voltage with respect to the specific resistance of the coil material by R(T) = R(T₀) x (1 + α x (T - T₀)).

## Revendications

1. Pompe (10) avec un moteur électrique (11) comprenant un stator (11) avec des enroulements de stator (16) disposés sur des branches polaires (14), et comprenant un rotor (20) magnétique en permanence, ledit rotor (20) entrainant une roue de pompe (24) par un arbre de rotor (22), les enroulements de stator (16) servant comme élément de chauffage, et un circuit de commande (18) est prévu par lequel les enroulements de stator (16) peuvent être commutés dans un mode de chauffage, ledit circuit de commande (18) activant le mode de chauffage dans une première étape et, dans une deuxième étape, arrête le mode de chauffage après une période t_{w} ou lorsqu'une température T_{w} est atteinte, et commence la commutation dudit moteur électrique (11) dans une troisième étape,
**caractérisée en ce qu'**un élément isolant (30) est disposé entre les enroulements de stator (16) et les branches polaires (14), ledit élément étant formé d'une matière plastique thermoconductrice, et le circuit de commande (18) met en oeuvre le mode de chauffage de sorte que les branches de stator (16) adjacentes sont alimentées en tension en alternance.

2. Pompe (10) selon la revendication 1, **caractérisée en ce que** ledit élément isolant (30) est un revêtement des branches polaires (14) formé d'une matière plastique thermoconductrice.

3. Pompe (10) selon la revendication 1 ou 2, **caractérisée en ce que** un élément d'insert (28) en une matière électriquement isolante est disposé entre le stator (12) et le carter de moteur (26).

4. Procédé pour l'opération d'une pompe (10) selon l'une quelconque des revendications 1 à 3, **caractérisé en ce que** le mode de chauffage est mis en oeuvre de sorte que les branches de stator (16) adjacentes sont alimentées en tension en alternance.

5. Procédé pour l'opération d'une pompe (10) selon la revendication 4, **caractérisé en ce que** d'abord une commutation est commencée et, dans l'étape suivante, il est détecté si le rotor (20) est en rotation, où la commutation est continue quand le rotor (20) est en rotation, et le procédé est continu seulement quand le rotor (20) est en arrêt.

6. Procédé pour l'opération d'une pompe (10) selon l'une quelconque des revendications 4 à 5, **caractérisé en ce que** la température T des branche de stator (16) est déterminée en fonction du flux de courant et la tension prédéterminée par référence à la résistance spécifique de la matière des enroulements, utilisant R(T) = R(T₀) x (1 + α x (T - T₀)).
